# EUROPEAN PATENT SPECIFICATION

(11) **EP 1 957 835 B1**
(45) Date of publication and mention of the grant of the patent: **15.06.2011**
(21) Application number: 05817546.4
(22) Date of filing: 01.12.2005
(51) Int. Cl.: F16H 61/662, F16H 57/04

(54) **METHOD OF OPERATING A CONTINUOUSLY VARIABLE TRANSMISSION**
VERFAHREN ZUM BETRIEB EINES STUFENLOSEN GETRIEBES
PROCÉDÉ DE FONCTIONNEMENT D'UNE TRANSMISSION À VARIATION CONTINUE

(43) Date of publication of application: 20.08.2008
(73) Proprietor: ROBERT BOSCH GMBH, 70442 Stuttgart (DE)
(72) Inventor: VAN DROGEN, Mark, NL-5021 EJ Tilburg (NL)
(74) Representative: Plevier, Gabriel Anton Johan Maria
(86) International application number: PCT/NL2005/000827
(87) International publication number: WO 2007/064190

(56) References cited:
- WO-A-2004/057217
- US-A1- 2004 142 789
- US-B1- 6 460 398

## Description

The present invention relates to a method of operating a continuously variable transmission, as provided in the preambles of the following claims 1 and 2.

Such a transmission typically comprises a drive belt in the form of a so-called pushbelt that is known per se. The pushbelt comprises metal transverse elements that are freely slidingly included in the belt relative to an endless tensile means thereof having the function of confining and guiding the transverse elements.

In such transmission, torque is transferred from one pulley to the other by clamping the belt between the conical discs of the respective pulley under the influence of a normal force, for which purpose at least one disc of the pulley is included axially moveable by means of an actuator. The said transfer of torque is realised by frictionally transferring a rotational movement of a driving pulley to the belt, of which the elements are provided with axial contact areas for contacting the discs of the pulley. At the other, i.e. driven pulley the force underlying said rotational movement of the driving pulley is conversely and also frictionally transferred from said belt to the discs of the driven pulley. The radius at which the belt runs in each pulley can be changed by changing the clamping force at each pulley in relation to one another, hereby a mathematical quotient between such radii represents a so-called geometric ratio of the transmission, whereas a ratio between the rotational speeds of the pulleys represents the actual speed ratio of the transmission. A difference between these two transmission ratios is representative of an amount of slip of the belt relative to the pulleys.

Hereby it is known to lubricate the frictional contact between the belt and a pulley, in particular the discs thereof, so as to prevent it from overheating and/or wearing out rapidly by severe adhesive wear. Typically, a flow of lubricant supplied to the said frictional contact is set such that it is adequately lubricated in all operating conditions of the transmission. It may thus be evident that controlling the frictional contact between pulley and belt is an important factor for correct and lasting operation of the transmission. However, the transmission efficiency can be improved by reducing the flow of lubricant in specific operating conditions of the transmission where such can be allowed. For example, from the Japanese patent publication JP-A-09/053711 it is known to regulate the flow of lubricant fed to the belt at the driving pulley in proportion with the geometric transmission ratio.

It is an object of the present invention to improve the known transmission, in particular its operating efficiency, more in particular by further rationalising, in particular minimising, the said flow of lubricant in relation to operating conditions of the transmission. According to the invention such can be attained by applying the measure as provided in the characterising portion of claim 2, i.e. by regulating the flow of lubricant fed to the belt and/or a pulley in proportion with the amount of slip S.

This measure departs from the so-called the critical borderline as previously described in the international paten publication WO-A-2004/057217, which constitutes the closest prior art, in the name of Applicant, which defines whether or not severe adhesive damage occurs and which could be defined in terms of the applied normal force Fn and the amount of slip S in the said frictional contact. Applicant has investigated this feature further and has found out that on a more fundamental level the said borderline is in fact defined by a critical temperature of the lubricant. When heated above such critical temperature, the lubricant would deteriorate, i.e. lose its required properties, such that for example a highly undesirable metal-to-metal contact and severe adhesive wear that is associated therewith can occur. Hereby, the temperature of the lubricant is raised by the heat generated in the said frictional contact, such that the said borderline can indeed be related to the normal force Fn and the amount of slip S in the said frictional contact. However, a modelling of the frictional contact has shown that at the normal force Fn levels and amounts of slip S that typically occur, at least in conventionally controlled transmissions, the generated heat predominantly varies with the amount of slip S.

The invention thus proposes to relate the flow of lubricant to the heat that is actually generated in the frictional contact between the belt and a pulley, which in accordance with the above may be conveniently related to the amount of slip S of the belt relative to the pulley, such that when more heat is generated it is carried away more effectively. Such flow of lubricant thus being a means of controlling the temperature in the said frictional contact, in particular with the aim of preventing it from exceeding the said critical temperature. Hereby, any raise in the temperature in the frictional contact is counteracted by increasing the heat that is drained therefrom, i.e. from the immediate vicinity of such contact, by the lubricant.

With relatively reduced effort and costs the performance of a transmission may thus be improved relatively simply by modulating the flow of lubricant in dependence on the amount of slip such that the known critical borderline is shifted towards a larger amount of slip S when such is required and vice versa.

Further, it appeared that at a relatively large amount of slip S, i.e. typically above 0.5 m/s, also the normal force Fn becomes a factor that significantly influences the heat generated in the said frictional contact. Such larger amounts of slip S are in particular applied in so-called slip-controlled transmissions, which is for example described in the above-mentioned international patent publication. In the slip-controlled transmission the applied normal force Fn applied is set by an electronic control unit of the transmission in relation to the detected amount of slip S, which latter value can for example be determined by comparing a measured speed ratio of the transmission with a measured geometric ratio thereof. In these circumstance it is according to the invention to be preferred that the flow of lubricant fed to the belt and/or a pulley is regulated in proportion not only with the said amount of slip S, but also with the applied normal force Fn.

Alternatively, i.e. in stead of using the amount of slip S and/or the normal force Fn to estimate the heat generated in the frictional contact between the belt and the pulley for regulating the flow of lubricant fed into the said frictional contact, such flow may according to the invention also be regulated in proportion with an actually determined, i.e. measured lubricant temperature. Of course, in this embodiment of the invention a temperature sensor is required.

The invention will now be elucidated further along a drawing in which:
Figure 1 diagrammatically depicts the relevant part of a continuously variable transmission including the drive belt and pulley components thereof;
Figure 2 is a graph illustrating the transmission's capacity to accommodate a speed difference or slip between its belt and pulley components in relation to the level of the normal force applied there between;
Figure 3 is a graph illustrating the relationship between slip and normal force as illustrated in figure 2, however, now differentiated for several lubricant flows supplied to the belt and/or pulley;
Figure 4 is a graph illustrating the relationship between the torque that is transmitted between the transmission's belt and pulley components and the said slip at constant normal force level for two geometric transmission ratios.

In the figures, corresponding references relate to corresponding functional or methodical elements.

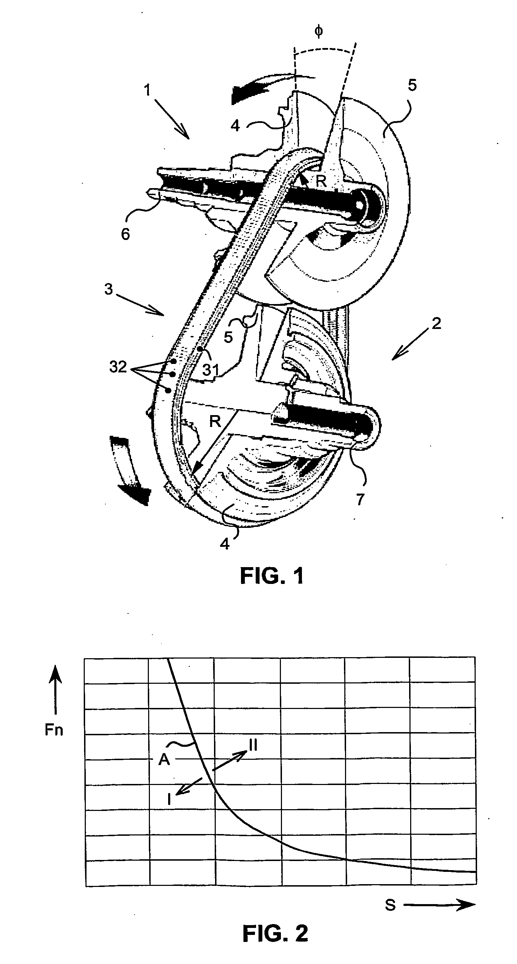

Figure 1 shows the central parts of a continuously variable transmission as is used in the drive of, for example, passenger cars. The transmission per se is generally known and comprises a first and second pulley 1 and 2, each comprising two pulley discs 4, 5, between which there is provided a drive belt 3. The pulley discs 4, 5 are shaped conically, and at least one disc 4 of a pulley 1, 2 can be displaced in the axial direction along a respective axle 6, 7 on which the discs 4, 5 are mounted. The transmission also includes activation means, which are not shown in the figure and can generally be controlled electronically and act hydraulically so that they can apply an axial force Fax to the above mentioned one disc 4, in such a manner that the drive belt 3 is clamped between the respective discs 4, 5 and the driving force of an axle 6, 7, i.e. a torque T supplied, is transmitted between the pulleys 1, 2 by means of friction in the conical contact surface between the discs 4, 5 and the drive belt 3. The minimum normal force Fn-min that is required for this purpose is determined using the torque T supplied, a running radius R of the drive belt 3 and a torque transmission coefficient τ. Usually, the normal force that is actually applied Fn in the frictional contact is determined by adding a so-called safety margin Sm to the said minimum normal force Fn-min, in order to account for inaccuracies and uncertainties in the calculation thereof.

The drive belt 3 shown in figure 1 comprises an endless tensile means 31 composed of two sets of nested thin metal rings that forms a carrier for a series of metal transverse elements 32, which absorb the clamping forces exerted between the discs 4, 5 of a pulley 1, 2 and which are moved over the endless tensile means 31, pushing one another, towards a driven pulley 2 as a result of a rotation of a driving pulley 1. A drive belt of this type is also known as the Van Doome pushbelt and is described in more detail in, for example, the European patent EP-A-0 626 526.

It is known that this type of transmission is at least to some extent able to withstand slippage, i.e. an amount of slip S, between either one of the pulleys 1, 2 and the belt 3. Figure 2, which is based the Dutch patent application number 1022242, illustrates this feature based on experimental data. In figure 2 it is defined by curve A as a function of the said normal force Fn and the amount of slip S whether or not under these operating conditions the transmission would be damaged to the extent that its operation is adversely affected. Hereby, beneath such borderline A, as indicated by arrow I, no severe adhesive damage occurs and above such, as indicated by arrow II, such damage does indeed occur.

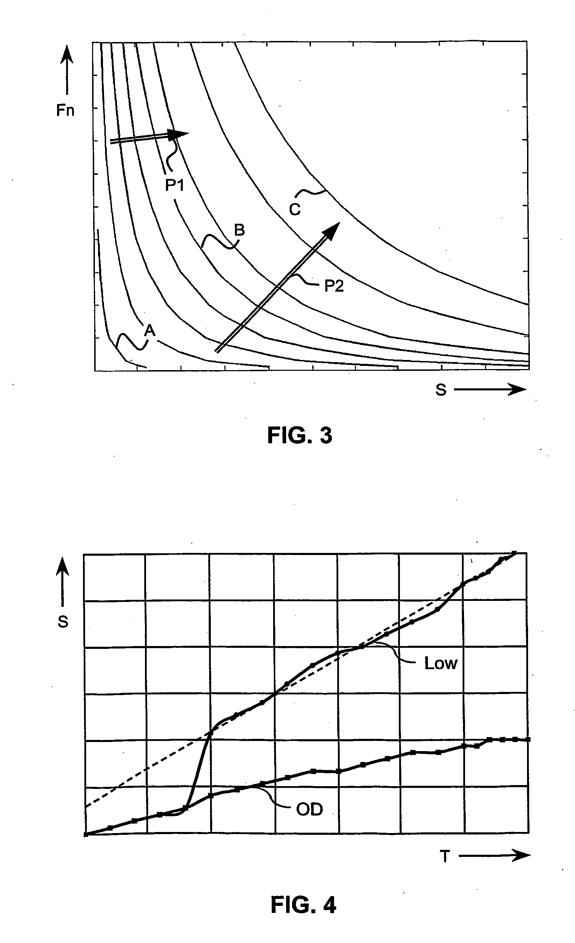

Figure 3 shows the result the attempt to influence the known borderline A of figure 2. Figure 3 illustrates the effect of the lubricant temperature in the frictional contact according a mathematical model that has been derived by Applicant and that underlies the present invention. Of the multiplicity of borderlines A to C in figure 3, each curve represents a still lower lubricant temperature, i.e. an increased flow of lubricant supplied to the frictional contact between the belt 3 and the pulley 1; 2. According to the insight underlying the present invention, the heat generated in frictional contact must thus be carried at least to such an extent that the temperature is maintained below a critical value, above which the lubricant would deteriorate, i.e. loose its required properties. Such generated heat could in accordance with the invention be predominantly linked to the parameters of applied normal force Fn and amount of slip S.

When looking in more detail to figure 3 it appears that at relatively small amounts of slip S, such as those that typically occur in the above-described conventionally controlled transmission, the heat generated in the said frictional contact predominantly varies in relation with the amount of slip S, as is illustrated in figure 3 by the arrow P1. In contrast therewith, at relatively large amounts of slip S, such as those that typically occur in a so-called slip-controlled transmission, the heat generated in the said frictional contact also is influenced to a significant extent by the normal force Fn, as is illustrated in figure 3 by the arrow P2.

Based on the above experiments and observations the invention provides for a method for regulating the flow of lubricant supplied to the said frictional contact in dependence on the relevant operating conditions of the transmission. More in particular the said flow is regulated either in proportion with the measured temperature of the lubricant or in proportion with one or more operating conditions that is representative thereof, i.e. at least the said amount of slip S, but preferably also the applied normal force Fn.

It is remarked that if the amount of slip S is not directly available, for example in case one of the speed ratio and the geometric ratio of the transmission is not measured, it can still be estimated by reference to a pre-programmed electronic mapping, i.e. a predetermined characteristic of the transmission, such as is graphically illustrated in figure 4. This mapping contains experimentally obtained data that links an amount of torque T that is instantaneously transmitted by the transmission and the current transmission ratio (Low, OD) to an amount of slip S that was found to occur in those specific operating conditions.

## Claims

1. Method of operating a continuously variable transmission comprising a drive belt (3) that is clamped between and in frictional contact with the discs (4,5) of a pulley (1 ;2) of the transmission under the influence of a normal force Fn, in particular for regulating the lubrication thereof, **characterised in that** a flow of lubricant fed to the belt (3) and/or the pulley (1;2) of the transmission is regulated in proportion with the measured temperature of the lubricant.

2. Method of operating a continuously variable transmission comprising a drive belt (3) that is clamped between and in frictional contact with the discs (4,5) of a pulley (1 ;2) of the transmission under the influence of a normal force Fn, in particular for regulating the lubrication thereof, **characterised in that** a flow of lubricant fed to the belt (3) and/or the pulley (1;2) of the transmission is regulated in proportion with an amount of slip S of the belt (3) relative to the pulley (1;2) in the said frictional contact.

3. Method according to claim 2, **characterised in that** the amount of slip S is determined by comparing a measured speed ratio of the transmission with a measured geometric ratio thereof.

4. Method according to claim 2, **characterised in that** the amount of slip S is estimated by reference to an electronic mapping of the transmission providing the estimated amount of slip S in relation to an amount of torque T transmitted by the transmission and a currentspeed or geometric ratio (Low, OD) of the transmission.

5. Method according to claim 2, 3 or 4, **characterised in that** the flow of lubricant fed to the belt and/or pulleys of the transmission is further regulated in proportion with the applied normal force Fn.

6. Method according to the preceding claim, **characterised in that** such dependency of the flow of lubricant on the applied normal force Fn is solely applied for relatively high amounts of slip S, in particular at a slip S above 0.5 m/s.

7. Method according to the preceding claim, **characterised in that** the normal force Fn applied is controlled by an electronic control unit of the transmission in relation to the amount of slip S as determined by comparing a measured speed ratio of the transmission with a measured geometric ratio thereof, more in particular the normal force Fn applied is controlled so as to maintain the said amount of slip S essentially constant.

8. Method according to any of the preceding claims, **characterised in that** the flow of lubricant fed to the belt and/or pulleys of the transmission further regulated in proportion with an actual speed or geometric ratio (Low, OD) of the transmission

9. Transmission arranged to operate in accordance with a method according to any one of the preceding claims.

## Patentansprüche

1. Verfahren zum Betrieb eines stufenlosen Getriebes mit einem Antriebsriemen (3), der unter dem Einfluss einer Normalkraft Fn zwischen den Scheiben (4, 5) einer Rolle (1; 2) des Getriebes festgeklemmt ist und in Reibkontakt mit diesen steht, um insbesondere die Schmierung davon zu regeln, **dadurch gekennzeichnet, dass** ein dem Riemen (3) und/oder der Rolle (1; 2) des Getriebes zugeführter Schmiermittelstrom proportional zu der gemessenen Temperatur des Schmiermittels geregelt wird.

2. Verfahren zum Betrieb eines stufenlosen Getriebes mit einem Antriebsriemen (3), der unter dem Einfluss einer Normalkraft Fn zwischen den Scheiben (4, 5) einer Rolle (1; 2) des Getriebes festgeklemmt ist und in Reibkontakt mit diesen steht, um insbesondere die Schmierung davon zu regeln, **dadurch gekennzeichnet, dass** ein dem Riemen (3) und/oder der Rolle (1; 2) des Getriebes zugeführter Schmiermittelstrom proportional zu einem Ausmaß an Schlupf S des Riemens (3) bezüglich der Rolle (1; 2) in dem Reibkontakt geregelt wird.

3. Verfahren nach Anspruch 2, **dadurch gekennzeichnet, dass** das Ausmaß an Schlupf S durch Vergleich eines gemessenen Übersetzungsverhältnisses des Getriebes mit einem gemessenen geometrischen Verhältnis davon bestimmt wird.

4. Verfahren nach Anspruch 2, **dadurch gekennzeichnet, dass** das Ausmaß an Schlupf S durch Bezug auf ein elektronisches Kennfeld des Getriebes geschätzt wird, das das geschätzte Ausmaß an Schlupf S im Verhältnis zu einer Größe des durch das Getriebe übertragenen Drehmoments T und einem aktuellen Übersetzungs- oder geometrischen Verhältnis (niedrig, OD) des Getriebes bereitstellt.

5. Verfahren nach Anspruch 2, 3 oder 4, **dadurch gekennzeichnet, dass** der dem Riemen und/oder den Rollen des Getriebes zugeführte Schmiermittelstrom weiterhin proportional zu der angelegten Normalkraft Fn geregelt wird.

6. Verfahren nach dem vorhergehenden Anspruch, **dadurch gekennzeichnet, dass** solch eine Abhängigkeit des Schmiermittelstroms von der angelegten Normalkraft Fn allein für relativ hohe Ausmaße an Schlupf S, insbesondere bei einem Schlupf S von über 0,5 m/s, angewandt wird.

7. Verfahren nach dem vorhergehenden Anspruch, **dadurch gekennzeichnet, dass** die Normalkraft Fn durch eine elektronische Steuereinheit des Getriebes im Verhältnis zum Ausmaß an Schlupf S, wie durch Vergleich eines gemessenen Übersetzungsverhältnisses des Getriebes mit einem gemessenen geometrischen Verhältnis davon bestimmt, gesteuert wird, insbesondere die angelegte Normalkraft Fn so gesteuert wird, dass sie das Ausmaß an Schlupf S im Wesentlichen konstant hält.

8. Verfahren nach einem der vorhergehenden Ansprüche, **dadurch gekennzeichnet, dass** der dem Riemen und/oder den Rollen des Getriebes zugeführte Schmiermittelstrom weiterhin proportional zu einem Istübersetzungsverhältnis oder geometrischen Istverhältnis (niedrig, OD) des Getriebes geregelt wird.

9. Getriebe, das zum Betrieb nach einem Verfahren nach einem der vorhergehenden Ansprüche angeordnet ist.

## Revendications

1. Procédé d'actionnement d'une transmission à variation continue comprenant une courroie d'entraînement (3) serrée entre et en contact par frottement avec les disques (4, 5) d'une poulie (1 ; 2) de la transmission sous l'influence d'une force normale Fn, notamment pour réguler son graissage, **caractérisé en ce qu'**un flux de lubrifiant amené à la courroie (3) et/ou à la poulie (1 ; 2) de la transmission est régulé proportionnellement à la température mesurée du lubrifiant.

2. Procédé d'actionnement d'une transmission à variation continue comprenant une courroie d'entraînement (3) serrée entre et en contact par frottement avec les disques (4, 5) d'une poulie (1 ; 2) de la transmission sous l'influence d'une force normale Fn, notamment pour réguler son graissage, **caractérisé en ce qu'**un flux de lubrifiant amené à la courroie (3) et/ou à la poulie (1 ; 2) de la transmission est régulé proportionnellement à une quantité de glissement S de la courroie (3) par rapport à la poulie (1 ; 2) dans ledit contact par frottement.

3. Procédé selon la revendication 2, **caractérisé en ce que** la quantité de glissement S est déterminée en comparant un rapport de vitesse mesuré de la transmission avec un rapport géométrique mesuré de celle-ci.

4. Procédé selon la revendication 2, **caractérisé en ce que** la quantité de glissement S est estimée en référence à une cartographie électronique de la transmission fournissant la quantité estimée de glissement S par rapport à une quantité de couple T transmis par la transmission et un rapport de vitesse actuelle ou géométrique (Low, OD) de la transmission.

5. Procédé selon la revendication 2, 3 ou 4, **caractérisé en ce que** le flux de lubrifiant amené à la courroie et/ou aux poulies de la transmission est en outre régulé proportionnellement à la force normale appliquée Fn.

6. Procédé selon la revendication précédente, **caractérisé en ce qu'**une telle interdépendance entre le flux de lubrifiant et la force normale appliquée Fn est seulement appliquée pour des quantités de glissement S relativement élevées, notamment pour un glissement S supérieur à 0,5 m/s.

7. Procédé selon la revendication précédente, **caractérisé en ce que** la force normale Fn appliquée est contrôlée par une unité de commande électronique de la transmission par rapport à la quantité de glissement S telle que déterminée en comparant un rapport de vitesse mesuré de la transmission avec un rapport géométrique mesuré de celle-ci, plus précisément la force normale Fn appliquée est contrôlée de façon à maintenir ladite quantité de glissement S essentiellement constante.

8. Procédé selon l'une quelconque des revendications précédentes, **caractérisé en ce que** le flux de lubrifiant amené à la courroie et/ou aux poulies de la transmission est en outre régulé proportionnellement à un rapport de vitesse réelle ou géométrique (Low, OD) de la transmission.

9. Transmission agencée pour fonctionner conformément à un procédé selon l'une quelconque des revendications précédentes.
